# EUROPÄISCHE PATENTSCHRIFT

(11) **EP 2 339 212 B1**
(45) Veröffentlichungstag und Bekanntmachung des Hinweises auf die Patenterteilung: **18.09.2013**
(21) Anmeldenummer: 10011823.1
(22) Anmeldetag: 29.09.2010
(51) Int. Cl.: F16H 55/44

(54) **Riemenscheibe und Verfahren zu ihrer Herstellung**
Pulley and method for its production
Poulie à courroie et son procédé de fabrication

(30) Priorität: 22.12.2009 DE 202009017376 U
(43) Veröffentlichungstag der Anmeldung: 29.06.2011
(73) Patentinhaber: Fischer & Kaufmann GmbH & Co. KG, 57413 Finnentrop (DE)
(72) Erfinder: Heutger, Tobias, 59846 Sundern (DE); Bischopink, Jürgen, 57462 Olpe (DE)
(74) Vertreter: Wunderlich, Rainer

(56) Entgegenhaltungen:
- EP-A1- 0 143 032
- DE-A1- 4 220 152
- DE-C2- 19 723 073
- FR-A3- 2 488 534
- US-A- 5 527 227
- US-A- 5 836 431
- US-B1- 6 293 885

## Beschreibung

Die Erfindung betrifft eine Riemenscheibe mit einem scheibenförmigen Nabenbereich und mindestens einem trommelförmigen Umfangsbereich, in welchen ein Poly-V-Profil spanlos eingeformt ist, welches gleichmäßig ausgebildete ringförmige Profilvorsprünge aufweist, gemäß dem Oberbegriff des Anspruchs 1 sowie ein Verfahren gemäß dem Oberbegriff des Anspruchs 5.

Eine Riemenscheibe mit Poly-V-Profil ist beispielsweise aus der DE 197 23 073 C2 bekannt. Diese Riemenscheibe, welche bekanntermaßen bei einem Riemenantrieb mit einem Poly-V-Riemen eingesetzt wird, wird aus einem Blechwerkstück hergestellt, wobei das Poly-V-Profil spanlos eingeformt wird. Hierbei wird eine entsprechend konturierte Formgebungsrolle radial in einen trommelförmigen Umfangsbereich des Werkstückes eingedrückt, so dass sich das gewünschte Poly-V-Profil ausbildet. Dabei ergeben sich zu beiden Seiten des Poly-V-Profiles radial vorstehende Ränder.

Weiterhin ist es bekannt, Riemenscheiben mit Poly-V-Profil aus trommelförmigen Rohlingen spanabhebend herzustellen. Dabei wird etwa durch einen Drehmeißel das entsprechende Profil in eine trommelförmige Umfangswand eingeschnitten. Dies ist gegenüber einem spanlosen Formen material- und arbeitsaufwändig. Zudem ergibt sich beim spanlosen Einformen eine Kaltverfestigung und eine verfestigte und geglättete Oberfläche, was insbesondere beim Einsatz von Gummi- oder Kunststoffriemen vorteilhaft ist.

Aus der gattungsbildenden DE 42 20 152 A1 geht eine Riemenscheibe mit einem Poly-V-Profil hervor, welche aus einem Blech gefertigt ist. Das Ausgangsblech wird zum Bilden eines trommelförmigen Umfangsbereiches am Rand umgelegt, wobei der Umfangsbereich jedoch gegenüber der Wanddicke des Nabenbereiches verdünnt wird.

DE 197 23 073 C2 und DE 42 20 152 A1 offenbaren beide die Merkmale der Oberbegriffe der Ansprüche 1 und 5.

Aus der US 5,527,227 ist eine Antriebsscheibe bekannt, bei der ebenfalls keine Verdickung des Umfangsbereiches vorgesehen ist. Auch sind am freien Rand des Umfangsbereiches definierte Randkanten vorgesehen.

Der Erfindung liegt die **Aufgabe** zugrunde, eine Riemenscheibe mit spanlos eingeformtem Poly-V-Profil anzugeben, welche besonders stabil und zugleich wirtschaftlich herstellbar und einsetzbar ist, sowie ein Verfahren zum Herstellen der Riemenscheibe. Die Aufgabe wird nach der Erfindung durch eine Riemenscheibe mit den Merkmalen des Anspruchs 1 bzw. ein Verfahren nach Anspruch 5 gelöst. Bevorzugte Ausführungsformen der erfindungsgemäßen Riemenscheibe sind in den abhängigen Ansprüchen angegeben.

Bei der erfindungsgemäßen Riemenscheibe ist vorgesehen, dass das spanlos eingeformte Poly-V-Profil frei von einem radial gegenüber den ringförmigen Profilvorsprüngen vorstehenden Randsaum bis zu mindestens einem freien Rand des trommelförmigen Umfangbereiches ausgebildet ist.

Ein Grundgedanke der Erfindung besteht darin, das Poly-V-Profil bis zu wenigstens einem freien Rand des Umfangsbereiches auszubilden, ohne dass an diesem freien Rand ein radial nach außen vorstehender Randsaum ausgebildet ist. Nach einer Erkenntnis der Erfindung wird ein Randsaum für den Einsatz einer Riemenscheibe bei einem Poly-V-Antrieb weder zwingend funktionsbedingt noch zwingend fertigungstechnisch benötigt. So kann eine Riemenscheibe mit Poly-V-Profil mit geringem Materialeinsatz hergestellt werden, was einerseits bei der Fertigung Kosten und andererseits im Betrieb Gewicht einspart. Insbesondere in der Fahrzeugindustrie stellt eine Gewichtseinsparung einen erheblichen Vorteil dar.

Der Vorteil der Erfindung ergibt sich grundsätzlich schon dann, wenn an lediglich einer freien Randseite der Riemenscheibe ein vorstehender Randsaum entfällt. Besonders bevorzugt ist es nach der Erfindung, dass das Poly-V-Profil sich über den gesamten Umfangsbereich bis zu den beiden freien Rändern erstreckt. Durch das beidseitige Entfallen eines vorstehenden Randsaumes wird eine entsprechend höhere Materialeinsparung erreicht. Zudem stellen die üblichen Poly-V-Profile mit drei, vier oder mehr V-förmigen Vorsprüngen bei Riemenantrieben eine ausreichende Sicherheit gegen ein seitliches Abspringen eines Poly-V-Riemens von der Riemenscheibe dar.

Nach der Erfindung ist es weiterhin vorteilhaft, dass die Profilvorsprünge jeweils zu ihren beiden Seiten Kontaktflanken zum Kontaktieren eines Poly-V-Riemens aufweisen und dass an dem mindestens einen freien Rand ein Außenprofilvorsprung ausgebildet ist, welcher ausschließlich eine Kontaktflanke aufweist. Die Kontaktflanken sind entsprechend dem vorgesehenen Poly-V-Riemen gegenüber der Radialrichtung schräg gestellt, um das gewünschte V-Profil zu bilden. Während die innenliegenden Profilvorsprünge gleiche beziehungsweise gegengleiche Kontaktflanken aufweisen, ist an dem Außenprofilvorsprung am freien Rand des Umfangsbereiches lediglich eine einzelne Kontaktflanke mit dem entsprechenden Schrägungswinkel für das Poly-V-Profil an der Seite ausgebildet, welche nach innen zu den weiteren Profilvorsprüngen gerichtet ist. An der freien Seite des Außenprofilvorsprunges ist eine freie Flanke ausgebildet, welche insbesondere als radial verlaufende Wand gestaltet ist. Grundsätzlich weist der Außenprofilvorsprung zumindest an der Basis eine geringere Materialstärke als die innenliegenden Profilvorsprünge auf. Die Materialstärke ist dabei vorzugsweise so gewählt, dass eine ausreichende Festigkeit besteht, so dass die Kontaktflanke des Außenprofilvorsprunges bei der Drehmomentübertragung zwischen Riemenscheibe und Riemen beiträgt. Hingegen ist die freie Flanke grundsätzlich so gestaltet, dass diese nicht mehr in Kontakt mit dem Riemen steht.

Es ist erfindungsgemäß, dass ein Ausgleichsbereich vorgesehen ist, welcher beim spanlosen Einformen des Poly-V-Profiles durch überschüssiges Material gebildet ist. Beim spanlosen Einformen des Poly-V-Profiles mittels einer Profilier- oder Formgebungsrolle erfolgt eine Materialverdrängung und ein Fließen des Werkstoffs, wie es vom Drücken und Drückwalzen bekannt ist. Verfahrensbedingt kann sich dabei zwischen den innen- und außenliegenden Profilvorsprüngen ein unterschiedlicher Materialfluss einstellen, welcher bei den bisherigen Verfahren durch die seitlichen Randsäume kompensiert oder aufgefangen werden konnte. Aufgrund von Toleranzschwankungen des Ausgangsmateriales und der Ausgangswerkstücke können Materialüberschüsse und ein derartiger Materialfluss nicht völlig ausgeschlossen werden. Hierzu ist an der Riemenscheibe ein entsprechender Ausgleichsbereich vorgesehen. Dieser Ausgleichsbereich, welcher lediglich einige Millimeter Erstreckung aufweisen kann, ist insbesondere im Bereich des freien Randes des Umfangsbereiches an einer Stelle angeordnet, an welcher funktionsbedingt größere Maßschwankungen tolerierbar sind.

Dabei ist es nach der Erfindung vorgesehen, dass der Ausgleichsbereich axial und/oder radial nach innen gegenüber dem Umfangsbereich vorsteht. Der Umfangsbereich kann grundsätzlich an der Riemenscheibe verbleiben oder durch einen eventuellen Bearbeitungsschritt entfernt werden.

Besonders bevorzugt ist es nach der Erfindung, dass der Ausgleichsbereich an dem Außenprofilvorsprung, insbesondere an dessen freier Flanke, ausgebildet ist. Der Ausgleichsbereich kann dabei ein konvex vorstehender Abschnitt sein. Dieser konvexe Vorsprung ist rotationssymmetrisch ausgebildet, so dass er an der Riemenscheibe keine Unwucht bildet.

Nach der Erfindung ist vorgesehen, dass der scheibenförmige Nabenbereich und der trommelförmige Umfangsbereich einstückig aus einem Blech geformt sind. Das Formen des Bleches kann in bekannter Weise durch Stanz-, Biege-, Tiefzieh- oder andere Umformvorgänge durchgeführt werden. Insbesondere kann eine Fertigung auf einer Transferstraße einer Presse erfolgen.

Zur Bildung besonders ausgeprägter Poly-V-Profile ist es nach der Erfindung vorgesehen, dass der Umfangsbereich gegenüber einer Wandstärke des scheibenförmigen Nahbereichs verdickt ist. Das Verdicken kann in bekannter Weise durch Stauchvorgänge mit entsprechenden Pressen- und Tiefziehwerkzeugen oder durch bekannte Drückwalzvorgänge erfolgen. Vorzugsweise ist an der Riemenscheibe lediglich ein trommelförmiger Umfangsbereich vorgesehen. Es können jedoch auch Riemenscheiben mit mehreren trommelförmigen Umfangsbereichen, welche insbesondere koaxial zueinander angeordnet sind, vorgesehen sein.

Die Erfindung wird anhand von Ausführungsbeispielen weiter beschrieben, welche schematisiert in den beigefügten Zeichnungen dargestellt sind.

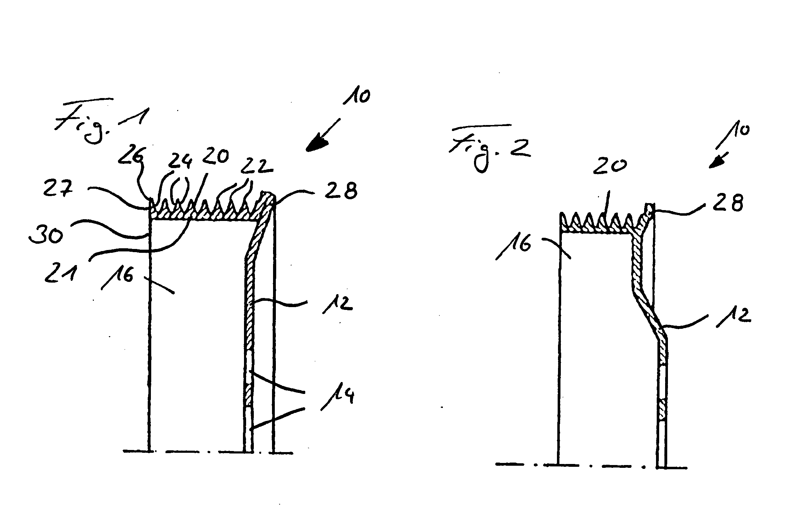

Die Figuren 1 bis 6 zeigen jeweils schematische Halbschnitte durch verschiedene Ausführungsformen einer erfindungsgemäßen Riemenscheibe.

Gemäß Figur 1 ist eine Riemenscheibe 10 aus einem Blech gebildet, wobei ein scheibenförmiger Nabenbereich 12 und ein axial dazu gerichteter Umfangsbereich 16 gebildet ist. Am scheibenförmigen Nabenbereich 12 ist ein Lochbild 14 eingestanzt, welches zur Befestigung an einer Welle oder zur Aufnahme einer hülsenförmigen Nabe dienen kann. Eine hülsenförmige Nabe kann auch einstückig, etwa durch Tiefziehen, an dem radial verlaufenden scheibenförmigen Nabenbereich 12 angeformt sein. Im Übergangsbereich zwischen dem Nabenbereich 12 und dem Um-fangsbereich 14 ist eine radial vorstehende Faltung gebildet, welche an dieser Seite als ein Randsaum 28 dient.

In den trommelförmigen Umfangsbereich 16 ist ein Poly-V-Profil 20 mit gleichmäßig ausgebildeten Profilvorsprüngen 22 spannlos eingeformt. Das Poly-V-Profil 20 erstreckt sich bis zu einem freien Rand 30, welcher von dem scheibenförmigen Nabenbereich 12 abgewandt ist. Während die innenliegenden Profilvorsprünge 22 zum Bilden spitzer Rillen zu beiden Seiten gegengleiche, schräge Kontaktflanken 24 aufweisen, ist am freien Rand 30 ein außenliegender Außenprofilvorsprung 26 gebildet, welcher lediglich eine nach innen gerichtete Kontaktflanke 24 aufweist. Die gegenüberliegende Seite bildet eine freie Flanke 27, welche radial gerichtet ist.

Bei den innenliegenden Profilvorsprüngen 22 sind die jeweiligen Kontaktflanken 24 gegengleich zur Radialrichtung angeschrägt, um die jeweilige V-Kontur zu bilden. Im Bereich ihrer Spitze weisen die innenliegenden Profilvorsprünge 22 und der Außenprofilvorsprung 26 in etwa die gleiche Materialstärke auf, während an der Basis, also am Übergang zum axial verlaufenden Profilbett 21 die Materialstärke in axialer Richtung des Außenprofilvorsprungs 26 kleiner ist als die Materialstärke der innenliegenden Profilvorsprünge 22. Im Ausführungsbeispiel gemäß Figur 1 ist die Materialstärke an dem Außenprofilvorsprung 26 im Bereich der Basis nur etwa halb so stark wie die Materialstärke an der Basis der innenliegenden Profilvorsprünge 22.

Bei der Riemenscheibe 10 gemäß Figur 2 ist der zum Nabenbereich 12 gerichtete Randsaum 28 ohne Faltung ausgebildet.

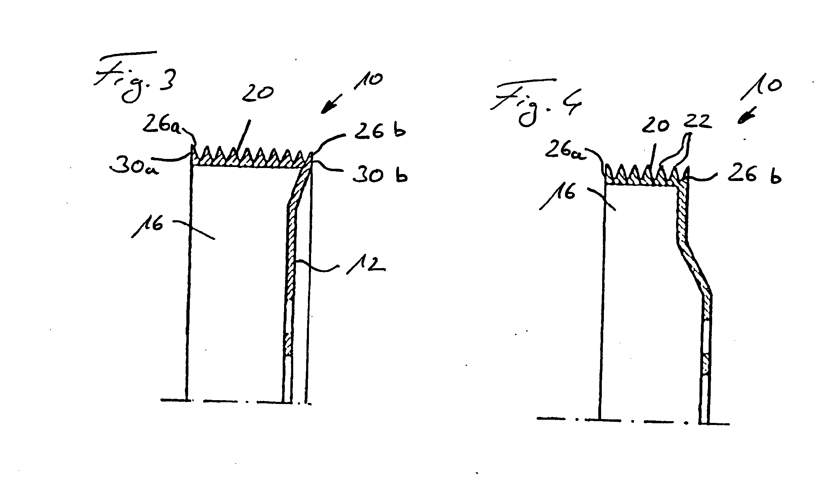

Bei der Ausführungsform gemäß Figur 3 erstreckt sich das Poly-V-Profil 20 über die gesamte Außenfläche des trommelförmigen Umfangbereiches 16. Das Poly-V-Profil 20 erstreckt sich somit ohne einen Randsaum über die gesamte Außenumfangsfläche. An den beiden freien Rändern 30a, 30b ist jeweils ein Außenprofilvorsprung 26a und 26b ausgebildet.

Eine vergleichbar ausgeformte Riemenscheibe 10 ist in Figur 4 dargestellt. Im Unterschied zur Riemenscheibe 10 von Figur 3 ist der trommelförmige Umfangsbereich 16 mit einer geringeren axialen Länge ausgebildet, wobei jedoch weiterhin über die gesamte axiale Außenfläche das Poly-V-Profil 20 eine gleichmäßige radiale Erstreckung der innenliegenden Profilvorsprünge 22 und der beiden außenliegenden Außenprofilvorsprünge 26a, 26b gegeben ist.

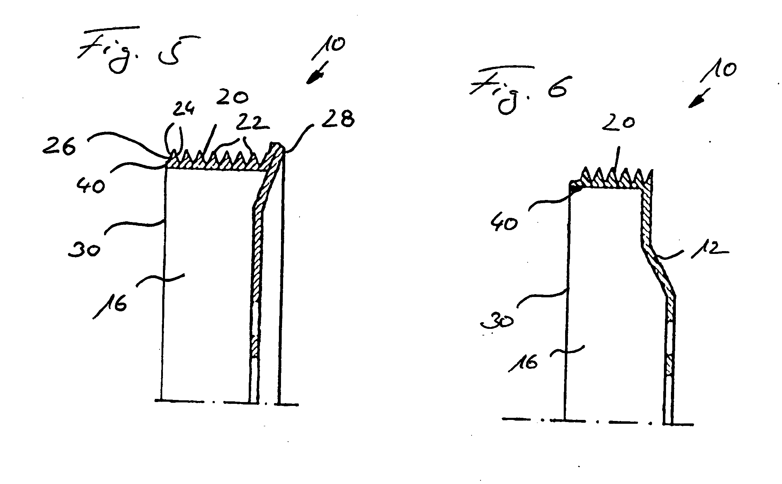

Die Riemenscheibe 10 gemäß Figur 5 zeigt wieder eine Ausführungsform mit einem einseitigen Randsaum 28, welcher radial gegenüber dem Poly-V-Profil 20 vorspringt. Der zum freien Rand 30 hin liegende Außenprofilvorsprung 26 weist wie die innenliegenden Profilvorsprünge 22 auf beiden Seiten schräg gestellte Kontaktflanken 24 auf, so dass beide Kontaktflanken 24 in Eingriff mit entsprechenden Flanken eines Poly-V-Riemens gelangen können.

Zum freien Rand 30 hin erstreckt sich in axialer Richtung ein Vorsprung, welcher als Ausgleichsbereich 40 dient und beim spannlosen Einformen des Poly-V-Profils 20 überschüssiges Material aufnehmen kann. Die axiale Erstreckung dieses Ausgleichsbereiches 40 kann also bei jeder Riemenscheibe 10 gewisse Maßabweichungen in Zehntel Millimeterbereich bis zu wenigen Millimetern abhängig von Toleranzschwankungen des Ausgangswerkstückes annehmen.

Gemäß der erfindungsgemäßen Riemenscheibe 10 nach Figur 6 erstreckt sich der Ausgleichsbereich 40 am freien Rand 30 von dem trommelförmigen Umfangsbereich 16 axial vom Nabenbereich 12 weg und gleichzeitig radial nach innen. Es wird so ein im Querschnitt tropfenförmiger, radial nach innen vorspringender Ring an der Innenseite des trommelförmigen Umfangsbereichs 16 gebildet. Der Raum an dieser Stelle wird auch bei Einbau der Riemenscheibe 10 in einem Riemenantrieb üblicherweise nicht benötigt, so dass hier ein Ausgleichsbereich 40 für relativ große Maßabweichungen und Materialüberschüsse ausgebildet werden kann.

Insgesamt wird mit der Erfindung eine Riemenscheibe 10 mit einem spannlos eingeformten Poly-V-Profil geschaffen, welche durch zumindest teilweisen Entfall eines Randsaumes 28 effizient herstellbar und mit einem geringeren Gewicht versehen ist. Die Erfindung umfasst grundsätzlich auch ein entsprechendes Verfahren zum Herstellen einer Riemenscheibe mit spannlosem Einformen des Poly-V-Profiles, wie es sich aus der vorstehenden Beschreibung ergibt.

## Patentansprüche

1. Riemenscheibe mit einem scheibenförmigen Nabenbereich (12) und mindestens einem trommelförmigen Umfangsbereich (16), in welchen ein Poly-V-Profil (20) spanlos eingeformt ist, welches gleichmäßig ausgebildete ringförmige Profilvorsprünge (22) aufweist,
wobei das spanlos eingeformte Poly-V-Profil (20) frei von einem radial gegenüber den ringförmigen Profilvorsprüngen (22) vorstehenden Randsaum (28) bis zu mindestens einem freien Rand (30) des trommelförmigen Umfangsbereiches (16) ausgebildet ist, und der scheibenförmige Nabenbereich (12) und der trommelförmige Umfangsbereich (16) einstückig aus einem Blech geformt sind, **dadurch gekennzeichnet,**
**dass** der Umfangsbereich (16) gegenüber einer Wandstärke des scheibenförmigen Nabenbereichs (12) verdickt ist,
**dass** an dem freien Rand (30) des Umfangsbereiches (16) ein Ausgleichsbereich (40) vorgesehen ist, welcher beim spanlosen Einformen des Poly-V-Profils (20) durch überschüssiges Material gebildet ist, und
**dass** der Ausgleichsbereich (40) als ein konvexer Vorsprung ausgebildet ist, welcher axial und/oder radial nach innen gegenüber dem Umfangsbereich (16) vorsteht.

2. Riemenscheibe nach Anspruch 1,
**dadurch gekennzeichnet,**
**dass** das Poly-V-Profil (20) sich über den gesamten Umfangsbereich (16) bis zu den beiden freien Rändern (30) erstreckt.

3. Riemenscheibe nach Anspruch 1 oder 2,
**dadurch gekennzeichnet,**
**dass** die Profilvorsprünge (22) jeweils zu ihren beiden Seiten Kontaktflanken (24) zum Kontaktieren eines Poly-V-Riemens aufweisen und
**dass** an dem mindestens einen freien Rand (30) ein Außenprofilvorsprung (26) ausgebildet ist, welcher ausschließlich eine Kontaktflanke (24) aufweist.

4. Riemenscheibe nach einem der Ansprüche 1 bis 3,
**dadurch gekennzeichnet,**
**dass** der Ausgleichsbereich (40) an dem Außenprofilvorsprung (26 an dessen freier Flanke (27) ausgebildet ist.

5. Verfahren zum Herstellen einer Riemenscheibe nach einem der Ansprüche 1 bis 4, mit einem scheibenförmigen Nabenbereich (12) und mindestens einem trommelförmigen Umfangsbereich (16), in welchen ein Poly-V-Profil (20) spanlos eingeformt wird, welches gleichmäßig ausgebildete ringförmige Profilvorsprünge (22) aufweist,
wobei das spanlos eingeformte Poly-V-Profil (20) frei von einem radial gegenüber den ringförmigen Profilvorsprüngen (22) vorstehenden Randsaum (28) bis zu mindestens einem freien Rand (30) des trommelförmigen Umfangsbereiches (16) ausgebildet wird und der scheibenförmige Nabenbereich (12) und der trommelförmige Umfangsbereich (16) einstückig aus einem Blech geformt werden, **dadurch gekennzeichnet,**
- **dass** der Umfangsbereich (16) gegenüber einer Wandstärke des scheibenförmigen Nabenbereichs (12) verdickt wird,
- **dass** an einem freien Rand (30) des Umfangsbereiches (16) ein Ausgleichsbereich (40) vorgesehen wird, welcher beim spanlosen Einformen des Poly-V-Profils (20) durch überschüssiges Material gebildet wird, und
- **dass** der Ausgleichsbereich (40) als ein konvexer Vorsprung ausgebildet wird, welcher axial und/oder radial nach innen gegenüber dem Umfangsbereich (16) vorsteht.

## Claims

1. Pulley having a disk-shaped hub area (12) and at least one drum-shaped circumferential area (16), into which a poly-V-profile (20) is formed in a non-cutting manner, which has uniformly designed ring-shaped profile projections (22), wherein the poly-V-profile (20) formed in a non-cutting manner is designed free from an edge seam (28), which projects radially with respect to the ring-shaped profile projections (22), up to at least one free edge (30) of the drum-shaped circumferential area (16) and wherein the disk-shaped hub area (12) and the drum-shaped circumferential area (16) are formed integrally from a sheet metal, **characterized in that**
the circumferential area (16) is thickened with respect to a wall thickness of the disk-shaped hub area (12),
on the free edge (30) of the circumferential area (16) a compensating area (40) is provided, which is constituted by excess material during the non-cutting forming of the poly-V-profile (20), and
**in that** the compensating area (40) is designed as a convex projection, which projects axially and/or radially inwards with respect to the circumferential area (16).

2. Pulley according to claim 1,
**characterized in that**
the poly-V-profile (20) extends across the entire circumferential area (16) up to both free edges (30).

3. Pulley according to claim 1 or 2,
**characterized in that**
the profile projections (22) each have contact flanks (24) on both sides for contacting a poly-V-belt and
**in that** on the at least one free edge (30) an external profile projection (26) is designed, which solely has one contact flank (24).

4. Pulley according to any one of claims 1 to 3,
**characterized in that**
the compensating area (40) is designed on the external profile projection (26) on its free flank (27).

5. Method for producing a pulley according to any one of claims 1 to 4, having a disk-shaped hub area (12) and at least one drum-shaped circumferential area (16), into which a poly-V-profile (20) is formed in a non-cutting manner, which has uniformly designed ring-shaped profile projections (22),
wherein the poly-V-profile (20) formed in a non-cutting manner is designed free from an edge seam (28), which projects radially with respect to the ring-shaped profile projections (22), up to at least one free edge (30) of the drum-shaped circumferential area (16) and wherein the disk-shaped hub area (12) and the drum-shaped circumferential area (16) are formed integrally from a sheet metal, **characterized in that**
- the circumferential area (16) is thickened with respect to a wall thickness of the disk-shaped hub area (12),
- on a free edge (30) of the circumferential area (16) a compensating area (40) is provided, which is constituted by excess material during the non-cutting forming of the poly-V-profile (20), and
- **in that** the compensating area (40) is designed as a convex projection, which projects axially and/or radially inwards with respect to the circumferential area (16).

## Revendications

1. Poulie à courroie avec une partie de type moyeu (12) en forme de disque et au moins une zone périphérique (16) en forme de tambour, dans laquelle on a formé sans découpe un profil (20) de type Poly V qui comporte des parties saillantes de profilé (22) annulaires régulièrement formées,
dans laquelle le profil (20) de type Poly V formé sans découpe est constitué librement à partir d'un bord (28) qui se prolonge selon une disposition radiale par rapport aux parties saillantes de profilé (22) annulaires jusqu'à au moins un bord libre (30) de la zone périphérique (16) en forme de tambour, et la partie de type moyeu (12) en forme de disque et la zone périphérique (16) en forme de tambour sont réalisées en une seule pièce à partir d'une feuille de métal,
**caractérisée :**
**en ce que** la zone périphérique (16) est épaissie par rapport à une épaisseur de paroi de la partie de type moyeu (12) en forme de disque,
**en ce que**, contre le bord libre (30) de la zone périphérique (16), il a été prévu une région de compensation (40) qui, lors de la formation sans découpe du profil (20) de type Poly V, est constituée au moyen d'un matériau en excédent,
et
**en ce que** la région de compensation (40) est constituée sous la forme d'une partie saillante convexe, qui se prolonge selon une disposition axiale et/ou radiale vers l'intérieur par rapport à la zone périphérique (16).

2. Poulie à courroie selon la revendication 1,
**caractérisée :**
**en ce que** le profil (20) de type Poly V s'étend sur la totalité de la zone périphérique (16) jusqu'aux deux bords libres (30).

3. Poulie à courroie selon la revendication 1 ou 2,
**caractérisée :**
**en ce que** les parties saillantes de profilé (22) comportent chacune, sur leurs deux côtés, des flancs de contact (24) pour l'entrée en contact d'une courroie de type Poly V, et
**en ce que**, au niveau au moins d'un bord libre (30), une partie saillante de profilé externe (26) est constituée, celle-ci comportant seulement un flanc de contact (24).

4. Poulie à courroie selon une des revendications 1 à 3,
**caractérisée :**
**en ce que** la région de compensation (40) est constituée en partant de la partie saillante de profilé externe (26), du flanc libre de celle-ci (27).

5. Procédé pour la fabrication d'une poulie à courroie selon une des revendications 1 à 4, avec une partie de type moyeu (12) en forme de disque et au moins une zone périphérique (16) en forme de tambour, dans laquelle on a formé sans découpe un profil (20) de type Poly V qui comporte des parties saillantes de profilé (22) annulaires régulièrement formées,
dans lequel le profil (20) de type Poly V formé sans découpe est constitué librement à partir d'un bord (28) qui se prolonge selon une disposition radiale par rapport aux parties saillantes de profilé (22) annulaires jusqu'à au moins un bord libre (30) de la zone périphérique (16) en forme de tambour, et la partie de type moyeu (12) en forme de disque et la zone périphérique (16) en forme de tambour sont réalisées en une seule pièce à partir d'une feuille de métal,
**caractérisé :**
- **en ce que** la zone périphérique (16) est épaissie par rapport à une épaisseur de paroi de la partie de type moyeu (12) en forme de disque,
- **en ce que**, contre un bord libre (30) de la zone périphérique (16), il a été prévu une région de compensation (40) qui, lors de la formation sans découpe du profil (20) de type Poly V, est constituée au moyen d'un matériau en excédent, et
- **en ce que** la région de compensation (40) est prévue sous la forme d'une partie saillante convexe, qui se prolonge selon une disposition axiale et/ou radiale vers l'intérieur à partir de la zone périphérique (16).
